(19) Europäisches Patentamt

European Patent Office

Office européen des brevets

(11) **EP 0 984 638 A1**

(12) **EUROPÄISCHE PATENTANMELDUNG**

(43) Veröffentlichungstag:
08.03.2000 Patentblatt 2000/10

(51) Int. Cl.⁷: **H04Q 3/00**

(21) Anmeldenummer: **98116939.4**

(22) Anmeldetag: **05.09.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**SIEMENS AKTIENGESELLSCHAFT**
**80333 München (DE)**

(72) Erfinder:
• **Pooch, Gerhard, Ing.**
  **82275 Emmering (DE)**
• **Köpp, Jörg, Dipl.-Ing.**
  **80337 München (DE)**
• **Belgardt, Eckhardt, Dipl.-Ing.**
  **81737 München (DE)**
• **Philipp, Markus, Dipl.-Ing.**
  **81476 München (DE)**
• **Sigl, Peter, Dipl.-Inform.**
  **84030 Ergolding (DE)**

(54) **Verfahren zum Umschalten von einem ersten Fernmeldenetz zu einem zweiten Fernmeldnetz**

(57) Zum Umschalten einer Teilnehmerstelle (TLN) von einem ersten Fernmeldenetz (N1) zu einem mit diesem verbundenen zweiten Fernmeldenetz (N2) werden zunächst zusätzlich zu in den Fernmeldenetzen (N1 und N2) enthaltenen primären Wegeleitinformationen für Verbindungen zu der betreffenden Teilnehmerstelle (TLN) hin in der Ortsvermittlungsstelle (OV1; OV2) wenigstens eines Fernmeldenetzes (N1, N2) bezüglich der Teilnehmerstelle (TLN) sekundäre Wegeleitinformationen gespeichert, die bei Nichtvorhandensein der Teilnehmerstelle (TLN) im jeweiligen Fernmeldenetz (N1, N2) den Verbindungsaufbau zum jeweils anderen Fernmeldenetz (N2, N1) weiterführen. Anschließend wird ggf. die primäre Wegeleitinformation in wenigstens einem Fernmeldenetz (N1, N2) so geändert, daß diese unter Umgehung der betreffenden Ortsvermittlungsstelle (OV1) zur Ortsvermittlungsstelle (OV2) des jeweils anderen Fernmeldenetzes (N2) hinweist. Danach wird die Teilnehmerstelle (TLN) vom ersten Fernmeldenetz (N1) zum zweiten Fernmeldenetz (N2) umgeschaltet.

FIG 6

## Beschreibung

Die Erfindung bezieht sich auf ein Verfahren zum Umschalten einer an einem ersten Fernmeldenetz angeschlossenen Teilnehmerstelle von dem ersten Fernmeldenetz zu einem zweiten Fernmeldenetz, welches mit dem ersten Fernmeldenetz über mindestens eine Verbindungsstelle verbunden ist, wobei in beiden Fernmeldenetzen bezüglich der betreffenden Teilnehmerstelle primäre Wegeleitinformationen (Routing-Informationen) enthalten sind, durch welche der Verbindungsaufbau in dem jeweiligen Fernmeldenetz zu der Ortsvermittlungsstelle hin festgelegt wird, an der die betreffende Teilnehmerstelle in dem ersten Fernmeldenetz angeschlossen ist.

Die Forderung nach einem effizienten Verfahren der vorstehend genannten Art hat in letzter Zeit aufgrund der weltweit zunehmenden Deregulierung auf dem Gebiet der Telekommunikation erheblich an Bedeutung gewonnen. Nach der betreffenden Deregulierung stehen alternative Fernmeldenetzbetreiber in Konkurrenz zu traditionellen Fernmeldenetzbetreibern. Dabei ermöglichen es gesetzliche Vorschriften (z.B. die Netzzugangsverordnung in Deutschland und der Telecommunication Act in U.S.A.), daß der marktbeherrschende traditionelle Fernmeldenetzbetreiber verpflichtet ist, die Nutzung von Leistungen räumlich an der jeweiligen Schnittstelle diskriminierungsfrei und zu den Bedingungen zu ermöglichen, die er sich selbst einräumt.

Aufgrund der gesetzlichen Rahmenvorgaben und nach deren Umsetzung steht es einem bisher am Fernmeldenetz des traditionellen Fernmeldenetzbetreibers angeschlossenen Teilnehmer frei, nach einem Wechsel zu einem konkurrierenden Fernmeldenetzbetreiber dessen Dienste, Tarifangebote und sonstigen Serviceleistungen in Anspruch zu nehmen.

Nachdem der alternative Fernmeldenetzbetreiber zur Bedienung einer Teilnehmerstelle bzw. der an seinem Netz angeschlossenen Teilnehmerstellen im allgemeinen einen galvanischen Zugang zu den Teilnehmerleitungen anstrebt, ist ein Umschalten der betreffenden Teilnehmerstellen vom traditionellen Fernmeldenetz, nachstehend als erstes Fernmeldenetz bezeichnet, zu dem alternativen Fernmeldenetz, nachstehend als zweites Fernmeldenetz bezeichnet, erforderlich. Der damit erforderliche Wechsel des Netzes kann in konventioneller Weise dadurch geschehen, daß die Teilnehmerleitung der jeweiligen Teilnehmerstelle von der Ortsvermittlungsstelle oder einer vorgelagerten Netzeinrichtung, wie einem Hauptverteiler oder Kabelverzweiger, des ersten Fernmeldenetzes abgeklemmt und an der entsprechenden Einrichtung des zweiten Fernmeldenetzes angeschlossen wird. Diese im allgemeinen manuell durchzuführenden Maßnahmen genügen jedoch noch nicht, um die betreffende Teilnehmerstelle, die im zweiten Fernmeldenetz ihre alte Rufnummer behalten will bzw. soll, unter der sie im ersten Fernmeldenetz erreichbar war, sowohl vom ersten Fernmeldenetz als auch in dem zweiten Fernmeldenetz zu erreichen. Vielmehr sind noch verschiedene Einträge in den Ortsvermittlungsstellen der beiden Fernmeldenetze bezüglich der betreffenden Teilnehmerstelle vorzunehmen bzw. zu löschen. Außerdem müssen die primären Wegeleitinformationen bezüglich der betreffenden Teilnehmerstelle in den beiden Fernmeldenetzen den veränderten Verhältnissen entsprechend angepaßt werden.

Überdies bringt das vorstehend betrachtete Umschalten einer an einem ersten Fernmeldenetz angeschlossenen Teilnehmerstelle von dem ersten Fernmeldenetz zu dem zweiten Fernmeldenetz ein Problem insofern mit sich, als dieser Umschaltvorgang und die damit zusammenhängenden Maßnahmen, die im ersten Fernmeldenetz und dem zweiten Fernmeldenetz zu treffen sind, in der Regel nicht zeitgleich und nicht von demselben Personal durchgeführt werden. Dies bedeutet aber, daß die betreffende Teilnehmerstelle, die umzuschalten ist, gegebenenfalls über längere Zeit weder in dem ersten Fernmeldenetz noch in dem zweiten Fernmeldenetz erreichbar ist. Wünschenswert wäre in diesem Zusammenhang, die Zeit des Wechsels vom ersten Fernmeldenetz zum zweiten Fernmeldenetz so kurz wie möglich, das heißt auf die Dauer des Umschaltvorgangs zu beschränken.

Der Erfindung liegt demgemäß die Aufgabe zugrunde, das Verfahren der eingangs genannten Art so zu gestalten, daß die eine Teilnehmerstelle, die von dem ersten Fernmeldenetz zu dem zweiten Fernmeldenetz umzuschalten ist, unter Beibehaltung ihrer Rufnummer möglichst weitgehend erreichbar ist.

Gelöst wird die vorstehend aufgezeigte Aufgabe bei einem Verfahren der eingangs genannten Art erfindungsgemäß, zum einen dadurch, daß zunächst in der Ortsvermittlungsstelle des ersten Fernmeldenetzes eine sekundäre Wegeleitinformation gespeichert wird, welche bezüglich der betreffenden Teilnehmerstelle bei deren Nichtvorhandensein einen Verbindungsaufbau über die genannte Verbindungsstelle zu dem zweiten Fernmeldenetz hin festlegt, und daß schließlich die betreffende Teilnehmerstelle von der Ortsvermittlungsstelle des ersten Fernmeldenetzes abgeschaltet und an der Ortsvermittlungsstelle des zweiten Fernmeldenetzes angeschaltet wird.

Die Erfindung bringt den Vorteil mit sich, daß allein durch administrative Tätigkeit im ersten Fernmeldenetz und durch Anschalten der genannten Teilnehmerstelle an der Ortsvermittlungsstelle des zweiten Fernmeldenetzes die betreffende Teilnehmerstelle, die von dem ersten Fernmeldenetz zu dem zweiten Fernmeldenetz umgeschaltet wird, ihre größtmögliche Erreichbarkeit im Zuge dieses "Umzuges" vom ersten Fernmeldenetz zum zweiten Fernmeldenetz erhält und dabei stets unter ihrer Rufnummer erreichbar ist bzw. bleibt, unter der sie im ersten Fernmeldenetz ursprünglich erreichbar war. Die Nichterreichbarkeit der betreffenden Teilnehmerstelle reduziert sich dabei lediglich auf die kurze Dauer des Umschaltens vom ersten Fernmeldenetz zum zweiten Fernmeldenetz, das heißt, die betreffende Teilnehmerstelle ist praktisch ohne Unterbrechung stets erreichbar und kann selbst stets Verbindungen aufbauen.

Vorzugsweise wird die primäre Wegeleitinformation in dem zweiten Fernmeldenetz bezüglich der betreffenden Teilnehmerstelle derart geändert, daß Verbindungen in dem zweiten Fernmeldenetz zu der betreffenden Teilnehmerstelle hin zur Ortsvermittlungsstelle dieses zweiten Fernmeldenetzes hin aufgebaut werden. Dies bringt den Vorteil mit sich, daß die Teilnehmerstelle nach Umschaltung vermittlungstechnisch erreichbar ist, insbesondere für Verbindungen, die ihren Ursprung im zweiten Fernmeldenetz haben.

Zweckmäßigerweise werden mit der Speicherung der sekundären Wegeleitinformation in der Ortsvermittlungsstelle des ersten Fernmeldenetzes bezüglich der genannten Teilnehmerstelle weitere Angaben festgehalten, die im Zuge von zu der Ortsvermittlungsstelle des ersten Fernmeldenetzes hin gelangenden Verbindungswünschen bezüglich der betreffenden Teilnehmerstelle in der Ortsvermittlungsstelle des ersten Fernmeldenetzes ein Hinweis auf eine im Wechsel befindliche Teilnehmerstelle liefern, und diese weiteren Angaben werden im Zuge eines Verbindungsaufbaus zu der betreffenden Teilnehmerstelle hin derart ausgewertet, daß in dem Fall, daß die betreffende Teilnehmerstelle an der Ortsvermittlungsstelle des ersten Fernmeldenetzes noch angeschlossen ist, der Verbindungsaufbau zu der betreffenden Teilnehmerstelle über diese Ortsvermittlungsstelle erfolgt, während bei nicht mehr an der betreffenden Ortsvermittlungsstelle angeschlossener Teilnehmerstelle die zugehörige sekundäre Wegeleitinformation zur Anwendung gelangt. Hierdurch ergibt sich der Vorteil relativ einfacher Verfahrensschritte im Zuge eines Verbindungsaufbaus zu der betrachteten Teilnehmerstelle hin, um die beiden Fälle voneinander zu unterscheiden, daß die betreffende Teilnehmerstelle noch bzw. nicht mehr an der Ortsvermittlungsstelle des ersten Fernmeldenetzes angeschlossen ist.

Vorteilhafterweise wird zur Aktivierung der sekundären Wegeleitinformation bezüglich der betreffenden Teilnehmerstelle in der Ortsvermittlungsstelle des ersten Fernmeldenetzes ein beim Abschalten der betreffenden Teilnehmerstelle hervorgerufener Fehler auf der Teilnehmerstellenanschlußleitung herangezogen. Dies bringt den Vorteil einer sofortigen Aktualisierung der Wegeleitinformation und der größeren Erreichbarkeit der Teilnehmerstelle mit sich.

Vorzugsweise wird nach dem Abschalten der betreffenden Teilnehmerstelle von der Ortsvermittlungsstelle des ersten Fernmeldenetzes die primäre Wegeleitinformation in dem ersten Fernmeldenetz derart geändert, daß von dem ersten Fernmeldenetz ausgehende Verbindungswünsche zu der betreffenden Teilnehmerstelle hin von dem ersten Fernmeldenetz über die genannte Verbindungsstelle zu dem zweiten Fernmeldenetz hin geleitet werden. Dies bringt den Vorteil einer Verringerung der Verkehrsbelastung im ersten Fernmeldenetz für Verbindungswünsche zu der genannten Teilnehmerstelle hin mit sich.

Anschließend werden vorzugsweise die sekundären Wegeleitinformationen bezüglich der betreffenden Teilnehmerstelle in der Ortsvermittlungsstelle des ersten Fernmeldenetzes gelöscht. Diese sekundären Wegeleitinformationen werden nämlich in dieser Ortsvermittlungsstelle des ersten Fernmeldenetzes nicht mehr gebraucht.

Überdies können in vorteilhafter Weise in der Ortsvermittlungsstelle des ersten Fernmeldenetzes Angaben bezüglich der betreffenden Teilnehmerstelle, die dort bisher angeschaltet war, gelöscht werden. Auch solche Angaben werden in dieser Ortsvermittlungsstelle nicht mehr gebraucht.

Zweckmäßigerweise wird beim Abschalten der Teilnehmerstelle in dem Fall, daß es sich um eine analoge Teilnehmerstelle handelt, ein Leitungsfehler in der Ortsvermittlungsstelle des ersten Fernmeldenetzes durch Erd- oder Kurzschluß- der zugehörigen Teilnehmerleitung hervorgerufen. Dies stellt für analoge Teilnehmerstellen eine einfache und wirksame Maßnahme der Signalisierung des Abschaltzustands dar.

Zur Leitungsfehlererkennung einer digitalen Teilnehmeranschlußleitung wird zweckmäßigerweise ein Trägersignal für die Dauer der Teilnehmerschaltung permanent wirksam gemacht und seitens der Ortsvermittlungsstelle des ersten Fernmeldenetzes überwacht wird. Diese Maßnahme stellt für eine digitale Teilnehmeranschlußleitung ebenfalls eine einfache und wirksame Maßnahme der Signalisierung des Abschaltzustands dar.

Die oben aufgezeigte Aufgabe wird andererseits bei einem Verfahren der eingangs genannten Art erfindungsgemäß dadurch gelöst, daß zunächst in der Vermittlungsstelle des zweiten Fernmeldenetzes eine sekundäre Wegeleitinformation gespeichert wird, welche bezüglich der betreffenden Teilnehmerstelle bei deren Nichtvorhandensein einen Verbindungsaufbau über die genannte Verbindungsstelle zu dem ersten Fernmeldenetz hin festlegt, daß sodann die primäre Wegeleitinformation in dem zweiten Fernmeldenetz bezüglich der betreffenden Teilnehmerstelle derart geändert wird, daß Verbindungen in dem zweiten Fernmeldenetz zu der betreffenden Teilnehmerstelle hin zu der Ortsvermittlungsstelle dieses zweiten Fernmeldenetzes aufgebaut werden, und daß schließlich die betreffende Teilnehmerstelle von der Ortsvermittlungsstelle des ersten Fernmeldenetzes abgeschaltet und an der Ortsvermittlungsstelle des zweiten Fernmeldenetzes angeschaltet wird. Durch diese Maßnahmen wird erreicht, daß allein durch administrative Tätigkeit im zweiten Fernmeldenetz und durch Anschalten der genannten Teilnehmerstelle an der Ortsvermittlungsstelle des zweiten Fernmeldenetzes die betreffende Teilnehmerstelle, die vom ersten Fernmeldenetz zu dem zweiten Fernmeldenetz umgeschaltet wird bzw. ist, bis zu der genannten Umschaltung von beiden Fernmeldenetzen aus voll und unter ihrer unveränderten Rufnummer erreichbar ist und erst nach der Anschaltung an der Ortsvermittlungsstelle des zweiten Fernmeldenetzes nur noch in diesem zweiten Fernmeldenetz erreichbar ist, bis mindestens eine noch zu erläuternde Zusatzmaßnahme getroffen ist, die dann wieder volle Erreichbarkeit der betreffenden Teilnehmerstelle von beiden Fernmeldenetzen aus garantiert.

Zweckmäßigerweise werden mit der Speicherung der sekundären Wegeleitinformation in der Ortsvermittlungsstelle des zweiten Fernmeldenetzes bezüglich der genannten Teilnehmerstelle weitere Angaben festgehalten, die im Zuge von zu der Ortsvermittlungsstelle des zweiten Fernmeldenetzes hin gelangenden Verbindungswünschen bezüglich der betreffenden Teilnehmerstelle in der Ortsvermittlungsstelle des zweiten Fernmeldenetzes einen Hinweis auf einen Teilnehmer im Wechsel liefern, und diese weiteren Angaben werden im Zuge eines Verbindungsaufbaus zu der betreffenden Teilnehmerstelle hin derart ausgewertet, daß in dem Fall, daß die betreffende Teilnehmerstelle an der zugehörigen Ortsvermittlungsstelle schon angeschlossen ist, der Verbindungsaufbau zu der betreffenden Teilnehmerstelle über diese Ortsvermittlungsstelle erfolgt, während bei noch nicht an der betreffenden Ortsvermittlungsstelle angeschlossener Teilnehmerstelle die zugehörige sekundäre Wegeleitinformation zur Anwendung gelangt. Hierdurch ergibt sich der Vorteil relativ einfacher Verfahrensschritte im Zuge eines Verbindungsaufbaus zu der betrachteten Teilnehmerstelle hin, um die beiden Fälle voneinander zu unterscheiden, daß nämlich die betreffende Teilnehmerstelle noch nicht bzw. schon an der Ortsvermittlungsstelle des zweiten Fernmeldenetzes angeschlossen ist.

Vorzugsweise wird zur Deaktivierung der sekundären Wegeleitinformation bezüglich der betreffenden Teilnehmerstelle in der Ortsvermittlungsstelle des zweiten Fernmeldenetzes ein beim Anschalten der betreffenden Teilnehmerstelle hervorgerufenes Fehlerendesignal auf der zugehörigen Teilnehmerstellenanschlußleitung herangezogen. Dadurch kann das Angeschlossensein der betreffenden Teilnehmerstelle an der Ortsvermittlungsstelle des zweiten Fernmeldenetzes schnell und eindeutig erkannt werden.

Nach dem Abschalten der betreffenden Teilnehmerstelle von der Ortsvermittlungsstelle des ersten Fernmeldenetzes wird zweckmäßigerweise die primäre Wegeleitinformation in dem ersten Fernmeldenetz derart geändert, daß von dem ersten Fernmeldenetz ausgehende Verbindungswünsche zu der betreffenden Teilnehmerstelle hin von dem ersten Fernmeldenetz über die genannte Verbindungsstelle zu dem zweiten Fernmeldenetz hin geleitet werden. Dies bringt den Vorteil mit sich, daß damit die betreffende Teilnehmerstelle auch vom ersten Fernmeldenetz wieder voll erreichbar ist und auch zu Teilnehmerstellen in diesem ersten Fernmeldenetz Verbindungen aufbauen kann.

Zweckmäßigerweise werden die sekundären Wegeleitinformationen bezüglich der betreffenden Teilnehmerstelle in der Ortsvermittlungsstelle des zweiten Fernmeldenetzes gelöscht. Diese Informationen werden dort nicht mehr benötigt und belasten daher nach ihrem Löschen nicht mehr die betreffende Ortsver

Vorzugsweise wird in der Ortsvermittlungsstelle des zweiten Fernmeldenetzes die dort zusammen mit der sekundären Wegeleitinformation zuvor gespeicherte Angabe, gemäß sich der die betreffende Teilnehmerstelle im Wechsel befindet, in den Anschluß der betreffenden Teilnehmerstelle an dieser Ortsvermittlungsstelle angebende Angaben geändert. Dies bringt den Vorteil einer besonders einfachen Kennzeichnung des Abschlusses der Umschaltphase und des Angeschlossenseins der betreffenden Teilnehmerstelle mit sich.

Zweckmäßigerweise wird beim Anschalten der Teilnehmerstelle in dem Fall, daß es sich um eine analoge Teilnehmerstelle handelt, ein Leitungsfehlerende an der Ortsvermittlungsstelle des zweiten Fernmeldenetzes durch die Aufhebung eines dort bestehenden Erd- oder Kurzschlusses der zugehörigen Teilnehmerleitung erreicht. Dies bringt den Vorteil einer sofortigen Signalisierung des Anschaltzustandes der Teilnehmerstelle mit sich.

Zur Leitungsfehlerendeerkennung einer digitalen Teilnehmeranschlußleitung wird vorzugsweise ein an diese für die Dauer der Teilnehmerstellenumschaltung permanent aktiviertes und seitens der Ortsvermittlungsstelle überwachtes Trägersignal verwendet. Dies bringt den Vorteil mit sich, daß die Anschaltung einer digitalen Teilnehmerstelle schnell erkannt werden kann.

Vorstehend sind zwei grundsätzliche Verfahren, ein erstes Verfahren und ein zweites Verfahren, und deren zweckmäßige Weiterbildungen zur Lösung der eingangs angegebenen Aufgabe betrachtet worden, gemäß denen die administrativ vorzunehmenden Umschaltmaßnahmen zunächst jeweils nur im ersten Fernmeldenetz bzw. im zweiten Fernmeldenetz durchgeführt worden sind.

Im folgenden wird gezeigt, daß die Aufgabe der Erfindung gemäß einer dritten Verfahrensvariante erfindungsgemäß dadurch gelöst wird, daß zusätzlich zu den Verfahrensschritten des vorstehend aufgezeigten ersten Verfahrens auch die Verfahrensschritte des aufgezeigten zweiten Verfahrens zur Anwendung kommen. Bezogen auf die Verfahrensschritte gemäß den Ansprüchen 1 und 10 bedeutet dies, daß die Aufgabe der Erfindung bei einem Verfahren der eingangs genannten Art erfindungsgemäß dadurch gelöst wird, daß zunächst in der Ortsvermittlungsstelle des ersten Fernmeldenetzes und des zweiten Fernmeldenetzes jeweils eine sekundäre Wegeleitinformation gespeichert wird, welches bezüglich der betreffenden Teilnehmerstelle bei deren Nichtvorhandensein einen Verbindungsaufbau über die genannte Verbindungsstelle zu dem jeweils anderen Fernmeldenetz hin festlegt, daß sodann die primäre Wegeleitinformation in dem zweiten Fernmeldenetz bezüglich der betreffenden Teilnehmerstelle derart geändert wird, daß Verbindungen in dem zweiten Fernmeldenetz zu der betreffenden Teilnehmerstelle hin zu der Ortsvermittlungsstelle dieses zweiten Fernmeldenetzes aufgebaut werden, und daß schließlich die betreffende Teilnehmerstelle von der Ortsvermittlungsstelle des ersten Fernmeldenetzes abgeschaltet und an der Ortsvermittlungsstelle des zweiten Fernmeldenetzes angeschaltet wird.

Die Erfindung bringt den Vorteil mit sich, daß die genannte Teilnehmerstelle, die von dem ersten Fernmeldenätz zu dem zweiten Fernmeldenetz umgeschaltet wird, ihre größtmögliche Erreichbarkeit im Zuge dieses "Umzuges" vom ersten Fernmeldenetz in das zweite Fernmeldenetz behält und dabei stets unter ihrer Rufnummer erreichbar ist bzw. bleibt, unter der sie im ersten Fernmeldenetz ursprünglich erreichbar war. Dadurch, daß in den Ortsvermittlungsstellen der beiden Fernmeldenetze die erwähnte sekundäre Wegeleitinformation gespeichert wird, die praktisch lediglich bei Nichtvorhandensein, das heißt bei Noch-Nicht-Angeschlossensein bzw. bei Nicht-Mehr-Angeschlossensein der betrachteten Teilnehmerstelle aktiv ist, ist die genannte Teilnehmerstelle solange im ersten Fernmeldenetz voll erreichbar, wie sie an deren Ortsvermittlungsstelle noch angeschlossen ist, und sie ist sofort in dem zweiten Fernmeldenetz wieder voll erreichbar, wenn sie an deren Ortsvermittlungsstelle angeschaltet ist. Die Nichterreichbarkeit der betreffenden Teilnehmerstelle reduziert sich damit lediglich auf die kurze Dauer des Umschaltens vom ersten Fernmeldenetz zum zweiten Fernmeldenetz, das heißt, die betreffende Teilnehmerstelle ist praktisch ohne Unterbrechung stets erreichbar und kann selbst stets Verbindungen aufbauen. Der Aufbau von Verbindungen von der genannten Teilnehmerstelle zu anderen Teilnehmerstellen in beiden Fernmeldenetzen ist ebenfalls praktisch stets ermöglicht.

Vorzugsweise werden mit der Speicherung der sekundären Wegeleitinformationen in den Ortsvermittlungsstellen der beiden Fernmeldenetze bezüglich der genannten Teilnehmerstelle weitere Angaben festgehalten, die im Zuge von zu der jeweiligen Ortsvermittlungsstelle hin gelangenden Verbindungswünschen bezüglich der betreffenden Teilnehmerstelle in der Ortsvermittlungsstelle des ersten Fernmeldenetzes einen Hinweis auf eine im Wechsel befindliche Teilnehmerstelle und in der Ortsvermittlungsstelle des zweiten Fernmeldenetzes einen Hinweis auf einen Teilnehmer im Wechsel liefern, und daß diese weiteren Angaben im Zuge eines Verbindungsaufbaus zu der betreffenden Teilnehmerstelle hin derart ausgewertet werden, daß in dem Fall, daß die betreffende Teilnehmerstelle an der zugehörigen Ortsvermittlungsstelle noch bzw. schon angeschlossen ist, der Verbindungsaufbau zu der betreffenden Teilnehmerstelle über diese Ortsvermittlungsstelle erfolgt, während bei noch nicht bzw. nicht mehr an der betreffenden Ortsvermittlungsstelle angeschlossener Teilnehmerstelle die zugehörige sekundäre Wegeleitinformation zur Anwendung gelangt. Hierdurch ergibt sich der Vorteil relativ einfacher Verfahrensschritte im Zuge eines Verbindungsaufbaus zu der betrachteten Teilnehmerstelle hin, um die beiden Fälle zu unterscheiden, daß die betreffende Teilnehmerstelle noch bzw. nicht mehr an der einen Ortsvermittlungsstelle und noch nicht bzw. schon an der anderen Ortsvermittlungsstelle angeschlossen ist.

Zweckmäßigerweise wird zur Aktivierung der sekundären Wegeleitinformation bezüglich der betreffenden Teilnehmerstelle in der jeweiligen Ortsvermittlungsstelle die Anschlußleitung der betreffenden Teilnehmerstelle in dem Fall, daß es sich um eine analoge Teilnehmerstelle handelt, geerdet oder kurzgeschlossen, und sie wird in dem Fall, daß es sich um eine digitale Teilnehmerstelle handelt, ständig mit einem Trägersignal beaufschlagt. Dadurch kann das Nichtangeschlossensein bzw. das Angeschlossensein der betreffenden Teilnehmerstelle an der jeweiligen Ortsvermittlungsstelle schnell und eindeutig erkannt werden.

Vorzugsweise wird nach dem Anschalten der betreffenden Teilnehmerstelle an der Ortsvermittlungsstelle des zweiten Fernmeldenetzes die primäre Wegeleitinformation in dem ersten Fernmeldenetz derart geändert, daß von dem ersten Fernmeldenetz ausgehende Verbindungswünsche zu der betreffenden Teilnehmerstelle hin von dem ersten Fernmeldenetz über die genannte Verbindungsstelle zu dem zweiten Fernmeldenetz hin geleitet werden. Dies bringt den Vorteil mit sich, daß unnötige Belastungen des ersten Fernmeldenetzes im Zuge des Aufbaus von Verbindungen zu der genannten Teilnehmerstelle hin vermieden werden können.

Vorzugsweise werden anschließend auch die sekundären Wegeleitinformationen bezüglich der betreffenden Teilnehmerstelle in den Ortsvermittlungsstellen der beiden Fernmeldenetze gelöscht. Diese sekundären Wegeleitinformationen sind nach Umschaltung der Teilnehmerstelle entbehrlich und brauchen daher nicht mehr in den Ortsvermittlungsstellen gespeichert zu werden.

Zweckmäßigerweise werden in der Ortsvermittlungsstelle des ersten Fernmeldenetzes auch Angaben bezüglich der betreffenden Teilnehmerstelle, die dort bisher angeschlossen war, gelöscht. Damit ist das Teilnehmerverzeichnis in der betreffenden Ortsvermittlungsstelle wieder aktualisiert und den tatsächlich vorliegenden Verhältnissen entsprechend in Ordnung gebracht.

Es ist auch von Vorteil, daß in der Ortsvermittlungsstelle des zweiten Fernmeldenetzes die dort zusammen mit der sekundären Wegeleitinformation zuvor gespeicherte Angabe, gemäß der sich die betreffende Teilnehmerstelle in Wechsel befindet, in den Anschluß der betreffenden Teilnehmerstelle an dieser Ortsvermittlungsstelle angebende Angaben geändert wird. Damit ist auch in dieser Ortsvermittlungsstelle den tatsächlich vorliegenden Gegebenheiten durch Aktualisierung gerecht geworden.

Zweckmäßigerweise können die primären und sekundären Wegeleitinformationen im jeweiligen Fernmeldenetz entweder lokal auf Vermittlungsstellenebene oder netzzentral gespeichert und zur Verfügung gestellt werden. Dies bringt den Vorteil der Anwendbarkeit des erfindungsgemäßen Verfahrens in allen gebräuchlichen Netzarchitekturen heutiger Fernmeldenetze mit sich.

Vorzugsweise wird eine im Zuge des Aufbaus ein und derselben Verbindung mehrfach über die Verbindungsstelle zwischen den beiden Fernmeldenetzen erfolgende Verbindungsführung durch eine Zählung des Verbindungsdurchgangs durch jeweils beteiligte Transitknoten erfaßt und der Abbau der betreffenden Verbindung wird bei Überschreiten einer festgelegten Anzahl solcher Verbindungsdurchgänge bewirkt. Derartige Verbindungsführungen können jedoch ebenso vorteilhaft durch besondere Maßnahmen in den beteiligten Ortsvermittlungsstellen OV1, OV2 vermieden werden. Eine dieser besonderen Maßnahmen kann z.B. darin bestehen, daß die die Verbindung an das weitere Netz weiterleitende Ortsvermittlungsstelle erneute Belegungen der Teilnehmerstelle während einer Schutzzeit generell zurückweist, womit derartige mehrfach über die Verbindungsstelle zwischen den Netzen geführte Verbindungen in einfacher Weise abgebaut werden. Damit kann die Belastung der beiden Fernmeldenetze und der Übergangsstelle in dem Fall verringert werden, daß zu der betreffenden Teilnehmerstelle hin Verbindungen in dem Fall aufzubauen sind, daß diese gerade umgeschaltet wird bzw. wegen Nichtangeschlossenseins an beiden Fernmeldenetzen oder wegen eines tatsächlichen Leitungsfehlers während der Umschaltphase nicht erreichbar ist.

Auch in dem Falle, daß die Teilnehmerstelle nicht direkt an mindestens einer der Ortsvermittlungsstellen angeschlossen ist, kann das erfindungsgemäße Verfahren in vorteilhafter Weise zur Anwendung kommen. In diesem Falle ist die Teilnehmerstelle über eine Zugriffsnetzwerk-Schnittstelle an mindestens einer der Ortsvermittlungsstellen angeschlossen bzw. anzuschließen und als Kriterium für eine Aktivierung bzw. Deaktivierung des Verbindungsaufbaus zu der betreffenden Teilnehmerstelle hin entsprechend der sekundären Wegeleitinformationen wird die an die jeweilige Ortsvermittlungsstelle seitens des Zugriffsnetzwerkes signalisierte Verfügbarkeit/Nichtverfügbarkeit der Teilnehmerstelle herangezogen.

Hiermit ist der Vorteil verbunden, daß das Verfahren auch in Netzen mit modernen Netzarchitekturen eingesetzt werden kann, in welchen zunehmend Zugriffsnetzwerke die Funktionen von Teilnehmeranschlußkonzentratoren bereitstellen.

Anhand von Zeichnungen wird die Erfindung nachstehend beispielsweise näher erläutert.

Fig. 1    zeigt schematisch ein erstes Fernmeldenetz und ein zweites Fernmeldenetz, wobei an dem ersten Fernmeldenetz eine Teilnehmerstelle angeschlossen ist, die von beiden Fernmeldenetzen aus erreichbar ist und die an das zweite Fernmeldenetz angeschaltet werden soll.

Fig. 2 und 3    veranschaulichen Umschaltmaßnahmen gemäß einer ersten Ausführungsform der Erfindung.

Fig. 4 und 5    veranschaulichen Umschaltmaßnahmen gemäß einer zweiten Ausführungsform der Erfindung.

Fig. 6 bis 8    veranschaulichen Umschaltmaßnahmen gemäß einer dritten Ausführungsform der Erfindung.

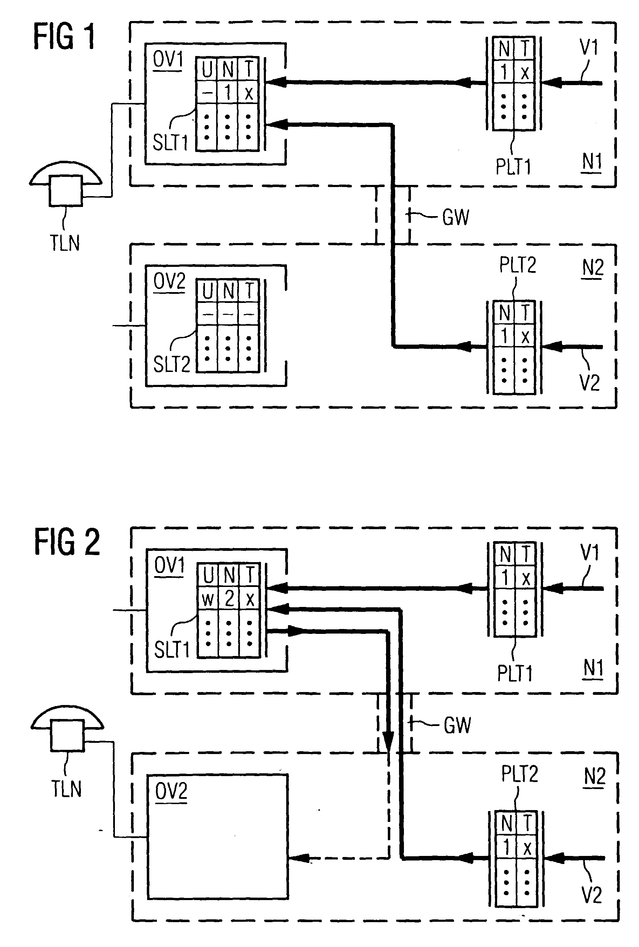

Fig. 1 zeigt bezüglich der nachstehend im einzelnen erläuterten Verfahren gemäß der Erfindung den Ausgangszustand der beiden Fernmeldenetze N1 und N2, die über wenigstens eine Verbindungsstelle GW miteinander verbunden sind. Bevor auf diese Verfahren eingegangen wird, soll zunächst der für das Verständnis der Erfindung notwendige grundsätzliche Aufbau der beiden Fernmeldenetze N1 und N2 betrachtet werden.

Jedes der beiden Fernmeldenetze N1 und N2 weist eine Anzahl von Vermittlungsstellen auf, von denen im vorliegenden Fall lediglich die Ortsvermittlungsstellen OV1 und OV2 angedeutet sind. An der Ortsvermittlungsstelle OV1 des Fernmeldenetzes N1 ist gemäß Fig. 1 die Teilnehmerstelle TLN angeschlossen, die zum Fernmeldenetz N2 umgeschaltet werden soll.

In den Fernmeldenetzen N1 und N2 ist jeweils eine Tabelle PLT1 bzw. PLT2 angedeutet, die für jede Teilnehmerstelle im Fernmeldenetz N1 und auch im Fernmeldenetz N2 eine primäre Wegeleitinformation (die auch als Routing-Information bezeichnet wird) enthält. Die beiden Tabellen PLT1 und PLT2 für primäre Wegeleitinformationen sind als einfache Tabellen angedeutet, die zwei Spalten T und N aufweist. In der Spalte T kann beispielsweise die Rufnummer der jeweiligen Teilnehmerstelle enthalten sein, und in der Spalte N kann eine Angabe über das Fernmeldenetz enthalten sein, an welchem die jeweilige Teilnehmerstelle angeschlossen ist. Gemäß Fig. 1 ist in der Tabelle PLT1 in der Spalte T ein x - das sei die Rufnummer der Teilnehmerstelle TLN - eingetragen, und in der Spalte N ist in dieser Tabelle eine 1 eingetragen. Dies bedeutet, daß ein Verbindungswunsch V1 bzw. ein Verbindungsaufbau innerhalb dieses Fernmeldenetzes N1 zu der Teilnehmerstelle TLN mit der Rufnummer x in diesem Fernmeldenetz N1 aufgebaut wird, im vorliegenden Fall zu der Ortsvermittlungsstelle OV1 hin.

Die beiden Fernmeldenetze N1 und N2 enthalten unter Umständen jeweils noch eine Tabelle SLT1 bzw. SLT2 für sekundäre Wegeleitinformationen, worauf nachstehend noch näher eingegangen wird. Gemäß Fig. 1 enthalten diese Tabellen SLT1 und SLT2 jeweils drei Spalten T, N und U, wobei lediglich die Tabelle SLT1 in der Spalte N die Rufnummer x der Teilnehmerstelle TLN und in der Spalte N eine 1, das heißt einen Hinweis auf die Erreichbarkeit dieser Teilnehmerstelle im ersten Fernmeldenetz N1 enthält. In der entsprechenden Tabelle SLT2 des zweiten Fernmeldenetzes N2 befinden sich zu diesem Zeitpunkt bezüglich der Teilnehmerstelle TLN noch keine Angaben.

Die in den vorstehend betrachteten Tabellen PLT1, PLT2, SLT1 und SLT2 gespeicherten primären bzw. sekundären Wegeleitinformationen können, wie dargestellt, im jeweiligen Netz lokal auf Vermittlungsstellenebene oder aber auch netzzentral gespeichert und bereitgestellt werden.

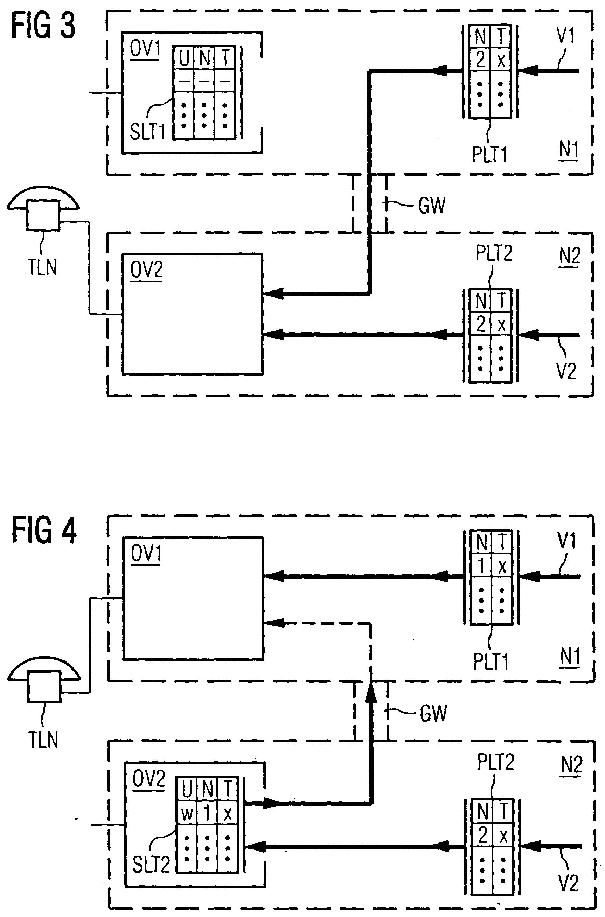

Nunmehr wird das Verfahren gemäß der Erfindung entsprechend der ersten Ausführungsform bzw. Alternative unter Bezugnahme auf Fig. 2 und 3 erläutert.

Gemäß Fig. 2 wird in die Tabelle SLT1 im ersten Fernmeldenetz N1 zunächst eine sekundäre Wegeleitinformation bezüglich der Teilnehmerstelle TLN in der Spalte T ein x - die Rufnummer der betreffenden Teilnehmerstelle TLN - eingetragen, und in deren zugehöriger Spalte N wird eine 2 eingetragen. In der weiteren Spalte U der betreffenden Tabelle SLT1 ist bezüglich der Teilnehmerstelle TLN mit der Rufnummer x ein Zeichen w eingetragen. Bei diesem Zeichen bzw. bei dieser Angabe handelt es sich um eine zusätzliche Angabe, die im Zuge von zu der jeweiligen Ortsvermittlungsstelle hin gelangenden Verbindungswünschen bezüglich der betrachteten Teilnehmerstelle TLN einen Hinweis auf eine im Wechsel befindliche Teilnehmerstelle liefert. Die Auswertung dieser Angabe im Zuge eines Verbindungsaufbaus zu der betreffenden Teilnehmerstelle TLN hin wird weiter unten noch näher erläutert werden.

Vor dem Umschalten der Teilnehmerstelle TLN vom ersten Fernmeldenetz N1 zum zweiten Fernmeldenetz N2 auftretende Verbindungswünsche V1 und V2 werden von beiden Fernmeldenetzen N1 und N2 zur Ortsvermittlungsstelle OV1 des ersten Fernmeldenetzes N1 hin geleitet. Ist die Teilnehmerstelle TLN indessen von der Ortsvermittlungsstelle OV1 des ersten Fernmeldenetzes N1 abgeschaltet und an der Ortsvermittlungsstelle OV2 des zweiten Fernmeldenetzes N2 angeschaltet, wie dies in Fig. 2 veranschaulicht ist, so werden solche Verbindungswünsche V1 und V2 jeweils zunächst zur Ortsvermittlungsstelle OV1 des ersten Fernmeldenetzes N1 hin gelangen und aufgrund der dort vorhandenen sekundären Wegeleitinformation über die genannte Verbindungsstelle GW zwischen den beiden Fernmeldenetzen N1 und N2 zum zweiten Fernmeldenetz N2 und in diesem zur Ortsvermittlungsstelle OV2 (siehe gestrichelte Linie)hin geführt.

Im Anschluß an die vorstehend betrachteten Maßnahmen kann die primäre Wegeleitinformation in dem zweiten Fernmeldenetz N2 bezüglich der betreffenden Teilnehmerstelle TLN derart geändert werden, daß Verbindungen in dem zweiten Fernmeldenetz N2 zu der betreffenden Teilnehmerstelle TLN hin direkt zu der zugehörigen Ortsvermittlungsstelle OV2 dieses zweiten Fernmeldenetzes N2 hin aufgebaut werden.

Damit ist die Teilnehmerstelle TLN, deren Umschaltung nach dem Einrichten der erwähnten sekundären Wegeleitinformation in der Ortsvermittlungsstelle OV1 des ersten Fernmeldenetzes N1 umgeschaltet wird, praktisch sofort nach Umschaltung und Änderung der primären Wegeleitinformation im zweiten Fernmeldenetz von beiden Netzen erreichbar.

Eine sekundäre Wegeleitinformation gemäß Tabelle SLT2 ist in der Ortsvermittlungsstelle OV2 des zweiten Fernmeldenetzes N2 nicht erforderlich.

In Fig. 3 ist veranschaulicht, daß in der Tabelle PLT2 für primäre Wegeleitinformationen im zweiten Fernmeldenetz N2 eine Änderung in der Spalte N bezüglich der Teilnehmerstelle mit der Rufnummer x von 1 in 2 vorgenommen ist.

Um nun die Verbindungsführung vom ersten Fernmeldenetz N1 bezüglich der Teilnehmerstelle TLN zum zweiten Fernmeldenetz N2 bezogen auf die in Fig. 2 dargestellten Verhältnisse zu vereinfachen, ist gemäß Fig. 3 vorgesehen, daß nach dem Anschalten der Teilnehmerstelle TLN an der Ortsvermittlungsstelle OV2 des zweiten Fernmeldenetzes N2 auch die primäre Wegeleitinformation in dem ersten Fernmeldenetz N1 so geändert wird, daß vom ersten Fernmeldenetz N1 ausgehende Verbindungswünsche V1 zu der Teilnehmerstelle TLN vom ersten Fernmeldenetz N1 über die Verbindungsstelle GW zum zweiten Fernmeldenetz N2, und zwar zu deren Ortsverbindungsstelle OV2 hin geleitet werden.

Nachdem die gemäß Fig. 2 in der Tabelle SLT1 der Ortsvermittlungsstelle OV1 des ersten Fernmeldenetzes N1 bezüglich der Teilnehmerstelle TLN mit der Rufnummer x eingetragene sekundäre Wegeleitinformation nunmehr entbehrlich ist, wird sie derart gelöscht; dieser nunmehr erreichte Zustand ist in Fig. 3 veranschaulicht.

Überdies werden in der betreffenden Tabelle SLT1 zuvor bezüglich der Teilnehmerstelle TLN mit der Rufnummer x eingetragene Angaben gelöscht, da sie hier nicht mehr benötigt werden.

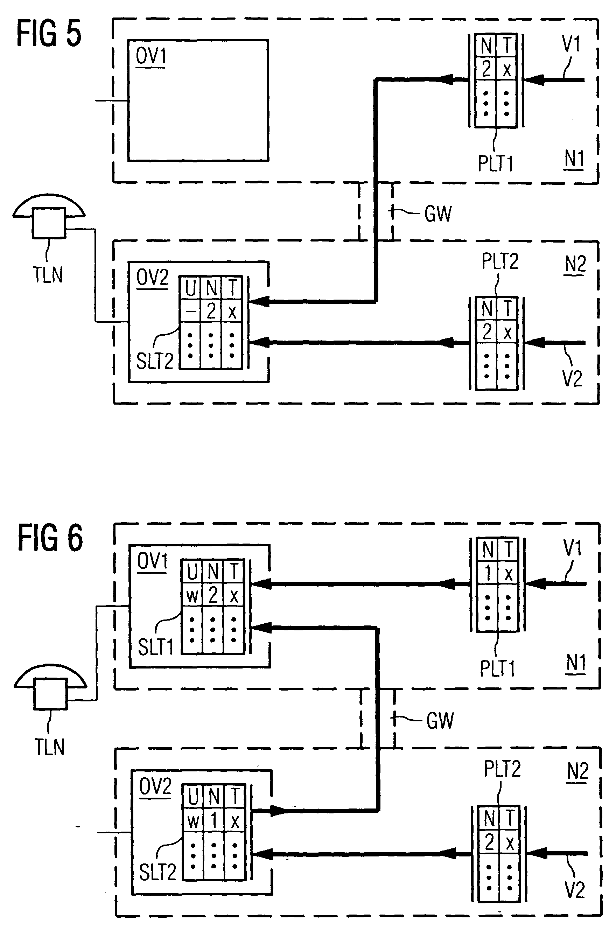

An dieser Stelle sei angemerkt, daß auf die nähere Bedeutung der in den Tabellen für sekundäre Wegeleitinformation eingetragenen Angaben in den Spalten U und über die Charakterisierung einer "Umzugs"-Teilnehmerstelle als im Wechsel befindlich weiter unten im Zusammenhang mit den Fig. 6 bis 8 noch näher eingegangen wird.

Im folgenden wird unter Bezugnahme auf die Fig. 4 und 5 eine zweite Ausführungsform bzw. Variante des Verfahrens gemäß der Erfindung erläutert.

Gemäß Fig. 4 wird zunächst in der Tabelle SLT2 für sekundäre Wegeleitinformationen in der Ortsvermittlungsstelle OV2 des zweiten Fernmeldenetzes N2 bezüglich der Teilnehmerstelle mit der Rufnummer x eine sekundäre Wegeleitinformation 1 gespeichert, die bezüglich der Teilnehmerstelle TLN bei deren Nichterreichbarkeit bzw. Vorhandensein im zweiten Ferneldenetz N2 einen Verbindungsaufbau über die genannte Verbindungsstelle GW zu dem ersten Fernmeldenetz N1 und in diesem zur Ortsvermittlungsstelle OV1 (siehe gestrichelte Linie) hin festlegt. Außerdem wird in der Spalte U der betreffenden Tabelle SLT2 bezüglich der Teilnehmerstelle TLN mit der Rufnummer x ein w (Teilnehmer im Wechsel) eingetragen. Sodann wird die primäre Wegeleitinformation in der Tabelle PLT2 des zweiten Fernmeldenetzes N2 bezüglich der genannten Teilnehmerstelle TLN derart geändert, daß Verbindungen von dem zweiten Fernmeldenetz N2 zu der betreffenden Teilnehmerstelle TLN hin zur Ortsvermittlungsstelle OV2 dieses zweiten Fernmeldenetzes N2 aufgebaut werden.

Solange die Teilnehmerstelle TLN noch an der Ortsvermittlungsstelle OV1 des ersten Fernmeldenetzes N1 angeschlossen ist, ist sie damit für Verbindungswünsche V1 und V2 von beiden Fernmeldenetzen N1 und N2 voll erreichbar.

Ausgehend von den zuvor im Zusammenhang mit Fig. 4 betrachteten Verfahrensmaßnahmen bzw. Verhältnissen wird anschließend die Teilnehmerstelle TLN von der Ortsvermittlungsstelle OV1 des ersten Fernmeldenetzes N1 abgeschaltet und an der Ortsvermittlungsstelle OV2 des zweiten Fernmeldenetzes N2 angeschaltet. Damit ist ihre Erreichbarkeit für Verbindungswünsche V2 aus dem Fernmeldenetz N2 weiterhin voll gegeben, während sie für Verbindungswünsche V1 aus dem ersten Fernmeldenetz N1 nunmehr nicht mehr erreichbar ist. Dies ändert sich indessen nach Durchführung von Verfahrensmaßnahmen, deren Ergebnisse in Fig. 5 veranschaulicht sind.

Die vorstehend erwähnten Maßnahmen betreffen zum einen eine Deaktivierung der sekundären Wegeleitinformation bezüglich der Teilnehmerstelle TLN in der Ortsvermittlungsstelle OV2 des zweiten Fernmeldenetzes nach Anschalten der betreffenden Teilnehmerstelle TLN an dieser Ortsvermittlungsstelle und zum anderen eine Maßnahme, gemäß der die primäre Wegeleitinformation in dem ersten Fernmeldenetz N1, und zwar in deren Tabelle PLT1, derart geändert wird, daß von dem ersten Fernmeldenetz ausgehende Verbindungswünsche V1 zu der Teilnehmerstelle TLN hin vom ersten Fernmeldenetz N1 über die Verbindungsstelle GW zwischen den beiden Fernmeldenetzen N1 und N2 zu dem zweiten Fernmeldenetz N2 hin geleitet werden. Diesen Maßnahmen Rechnung tragend ist die Tabelle PLT1 für primäre Wegeleitinformationen im ersten Fernmeldenetz N1 derart geändert, daß bezüglich der Teilnehmerstelle TLN mit der Rufnummer x nunmehr in deren Spalte N eine 2 eingetragen ist. Nach Durchführung der vorstehend bezeichneten Maßnahmen ist die nunmehr an der Ortsvermittlungsstelle OV2 des zweiten Fernmeldenetzes N2 angeschlossene Teilnehmerstelle TLN unter ihrer ursprünglichen Rufnummer x von beiden Fernmeldenetzen N1 und N2 wieder voll erreichbar und kann Verbindungen zu Teilnehmerstellen dieser Fernmeldenetze N1 und N2 ohne weiteres herstellen.

Die in der Spalte U der Tabelle SLT2 bezüglich der Teilnehmerstelle TLN mit der Rufnummer x eingetragene Angabe w wird in entsprechender Weise wie dies im Zusammenhang mit Fig. 2 erläutert worden ist, im Zuge eines Verbindungsaufbaus zu dieser Teilnehmerstelle TLN hin derart ausgewertet, daß in dem Fall, daß die betreffende Teilnehmerstelle TLN noch nicht an der Ortsvermittlungsstelle OV2 des zweiten Fernmeldenetzes N2 angeschlossen ist, diese sekundäre Wegeleitinformation aktiviert ist und zur Verbindungsweiterführung (V2) vom zweiten Fernmeldenetz über die Verbindungsstelle GW zum ersten Fernmeldenetz, und zwar dort zur Ortsvermittlungsstelle OV1 hin führt, an der die Teilnehmerstelle TLN ja noch angeschlossen ist. In dem Fall, daß die Teilnehmerstelle TLN bereits an der Ortsvermittlungsstelle OV2 des zweiten Fernmeldenetzes N2 angeschlossen ist, wird die betreffende sekundäre Wegeleitinformation W nicht aktiviert, sondern vielmehr wird die betreffende Teilnehmerstelle TLN aufgrund von Verbindungswünschen V2 im zweiten Fernmeldenetz N2 direkt erreichbar sein.

Vorstehend sind anhand der Fig. 2 und 3 sowie anhand der Fig. 4 und 5 zwei Ausführungsformen bzw. Varianten des Verfahrens gemäß der Erfindung erläutert worden, gemäß denen Verfahrensmaßnahmen zunächst nur vom Fernmeldenetz N1 bzw. vom Fernmeldenetz N2 aus erfolgen und denen dann Verfahrensmaßnahmen nachfolgen, die im jeweils anderen Fernmeldenetz N2 bzw. N1 ausgeführt werden.

Nachstehend wird anhand der Fig. 6 bis 8 eine Ausführungsform bzw. Variante des Verfahrens gemäß der Erfindung erläutert, welche die Vorteile der beiden vorstehend erläuterten Verfahrensvarianten zusammenfaßt bzw. gemeinsam nutzt.

Gemäß Fig. 6 sind die Verhältnisse zu Beginn des Umschaltens der an den ersten Fernmeldenetz N1 angeschlossenen Teilnehmerstelle TLN von diesem ersten Fernmeldenetz N1 zu dem zweiten Fernmeldenetz N2 veranschaulicht. Zunächst werden in den Ortsvermittlungsstellen OV1 und OV2, und zwar genauer gesagt in den Tabellen SLT1 und SLT2 sogenannte sekundäre Wegeleitinformationen gespeichert. Diese sekundären Wegeleitinformationen geben an, in welcher Ortsvermittlungsstelle bzw. in welchem Fernmeldenetz die betrachtete Teilnehmerstelle TLN angeschlossen sein wird bzw. noch angeschlossen ist. Mit anderen Worten ausgedrückt heißt dies, daß die in der Tabelle SLT1 gespeicherte sekundäre Wegeleitinformation aus der in der Spalte T eingetragenen Rufnummer x und aus der in der Spalte N eingetragenen Netzangabe 2 bedeutet, daß in dem Fernmeldenetz N1 auftretende Verbindungswünsche zu der Teilnehmerstelle TLN an sich von der Ortsvermittlungsstelle OV1 zu dem Fernmeldenetz N2 weiterzuleiten sind, was allerdings im vorliegenden Fall entbehrlich ist, da die Teilnehmerstelle TLN noch an der Ortsvermittlungsstelle OV1 angeschlossen ist. Der im Zuge eines Verbindungswunsches bzw. Verbindungsaufbaus VI in dem Fernmeldenetz N1 ablaufende vermittlungstechnische Vorgang erkennt aus der primären Wegeleitinformation, die in der Tabelle PLT1 enthalten ist, daß die Verbindung zu der Teilnehmerstelle TLN mit der Rufnummer x zu der Ortsvermittlungsstelle OV1 hin aufzubauen ist und daß wegen des Vorhandenseins der betreffenden Teilnehmerstelle diese Verbindung nicht zum Fernmeldenetz N2 umzuleiten ist.

Die in der Tabelle SLT2 bezüglich der Teilnehmerstelle TLN eingetragenen Angaben T=x und N=1 kommen dann nicht zum Tragen, wenn die primäre Wegeleitinformation in dem zweiten Fernmeldenetz N2 noch bezüglich der betrachteten Teilnehmerstelle TLN auf das erste Fernmeldenetz N1 verweist.

In dem Fernmeldenetz N2 wird allerdings die primäre Wegeleitinformation in der Tabelle PLT2 bezüglich der betrachteten Teilnehmerstelle TLN nunmehr derart geändert, daß Verbindungen bzw. Verbindungswünsche V2 in diesem zweiten Fernmeldenetz N2 zu der betreffenden Teilnehmerstelle TLN mit der Rufnummer x hin zu der Ortsvermittlungsstelle OV2 dieses zweiten Fernmeldenetzes N2 aufgebaut werden. In der Spalte N der Tabelle PLT2 ist bezüglich der Rufnummer x, die in der Spalte T dieser Tabelle enthalten ist, nunmehr im Unterschied zur Fig. 1 eine 2 eingetragen.

Ein diese primäre Wegeleitinformation in dem zweiten Fernmeldenetz N2 berücksichtigende Verbindung zu der Teilnehmerstelle TLN mit der Rufnummer x erfolgt also zunächst zu der Ortsvermittlungsstelle OV2 des zweiten Fernmeldenetzes N2 hin und wird dort aufgrund der in der dortigen Tabelle SLT2 eingetragenen sekundären Wegeleitinformation und wegen des Nichtvorhandenseins der gewünschten Teilnehmerstelle TLN - diese ist noch an der Ortsvermittlungsstelle OV1 des ersten Fernmeldenetzes N1 angeschlossen - über die gemeinsame Verbindungsstelle GW zu der Ortsvermittlungsstelle OV1 des ersten Fernmeldenetzes N1 weitergeleitet. Damit ist die Teilnehmerstelle TLN nach wie vor unter ihrer Rufnummer x in beiden Fernmeldenetzen N1 und N2 erreichbar.

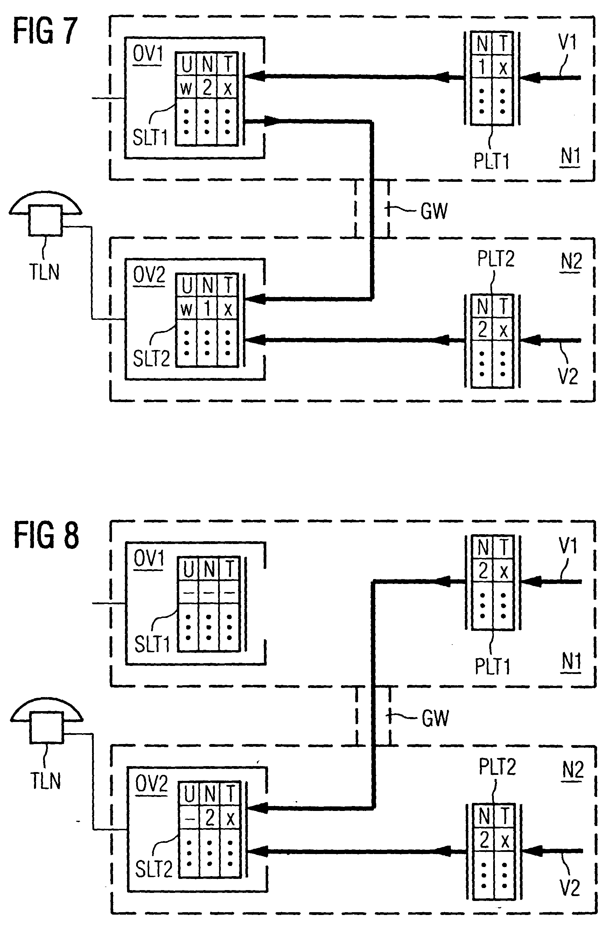

Bevor auf die Fig. 7 und 8 eingegangen wird, sei nochmals kurz auf die für die Speicherung der sekundären Wegeleitinformationen vorgesehenen Tabellen SLT1 und SLT2 näher eingegangen. Diese Tabellen weisen jeweils noch eine Spalte U auf, in der jeweils ein w eingetragen ist. Bei diesen Angaben handelt es sich um zusätzliche Angaben, die im Zuge von zu der jeweiligen Ortsvermittlungsstelle hin gelangenden Verbindungswünschen bezüglich der betrachteten Teilnehmerstelle TLN im Falle der Ortsvermittlungsstelle OV1 des ersten Fernmeldenetzes N1 einen Hinweis auf eine im Wechsel befindliche Teilnehmerstelle und im Falle der Ortsvermittlungsstelle OV2 des zweiten Fernmeldenetzes N2 einen Hinweis auf einen Teilnehmer im Wechsel liefern. Diese Angaben können durch den vermittlungstechnischen Prozeß im Zuge des jeweiligen Verbindungsaufbaus zu der Teilnehmerstelle TLN hin derart ausgewertet werden, daß in dem Fall, daß die Teilnehmerstelle TLN noch an der Ortsvermittlungsstelle OV1 oder schon an der Ortsvermittlungsstelle OV2 angeschlossen ist, der Verbindungsaufbau zu dieser Teilnehmerstelle TLN über die betreffende Ortsvermittlungsstelle erfolgt. Wenn hingegen die betreffende Teilnehmerstelle TLN noch nicht an der Ortsvermittlungsstelle OV2 bzw. nicht mehr an der Ortsvermittlungsstelle OV1 angeschlossen ist, dann werden die betreffenden Angaben im Zuge des Aufbaus der jeweiligen Verbindung zu der Teilnehmerstelle TLN hin vom ablaufenden vermittlungstechnischen Prozeß dahingehend ausgewertet, daß die zugehörige sekundäre Wegeleitinformation zur Anwendung gelangt, also der Verbindungswunsch zum jeweils anderen Fernmeldenetz weitergeleitet wird.

Im Hinblick auf die Auswertung der vorstehend betrachteten Angaben in den Tabellen SLT1 und SLT2 sei noch angemerkt, daß als Kriterium zur Aktivierung/Deaktivierung der sekundären Wegeleitinformation bezüglich der jeweiligen Teilnehmerstelle in den betrachteten Ortsvermittlungsstellen der Fehlerzustand der Teilnehmeranschlußleitung herangezogen werden kann. In dem Fall, daß es sich dabei um eine analoge Teilnehmerstelle handelt, kann der Fehlerzustand durch Erdung oder Kurzschluß nach Wegschalten bzw. vor Anschalten der Teilnehmerleitung hervorgerufen werden; in dem Fall, daß es sich um eine digitale Teilnehmerstelle handelt, kann deren Anschlußleitung ständig mit einem Trägersignal beaufschlagt werden, was bei offener Leitung eine schnelle Leitungsfehlererkennung bzw. bei angeschlossener Teilnehmerstelle TLN eine schnelle Fehlerendeerkennung ermöglicht.

Fig. 7 veranschaulicht den Verfahrensschritt, gemäß dem die Teilnehmerstelle TLN von der Ortsvermittlungsstelle OV1 des ersten Fernmeldenetzes N1 abgeschaltet und an der Ortsvermittlungsstelle OV2 des zweiten Fernmeldenetzes N2 angeschaltet worden ist. Dabei wird die sekundäre Wegeleitinformation bezüglich der Teilnehmerstelle TLN in der Tabelle SLT2 deaktiviert - was das Erkennen eines Leitungsfehlerendes ermöglicht - und die entsprechende sekundäre Wegeleitinformation in der Tabelle SLT1 wird aktiviert, da ein Leitungsfehler hervorgerufen wird. Nunmehr ist die Teilnehmerstelle TLN in dem Fernmeldenetz N2 direkt für von dort auftretende Verbindungswünsche V2 erreichbar, während bei im Fernmeldenetz N1 bezüglich der Teilnehmerstelle TLN mit der Rufnummer x auftretenden Verbindungswünschen V1 jetzt dort, und zwar genauer gesagt in der Ortsvermittlungsstelle OV1, die gleichen Vorgänge ablaufen, die zuvor anhand von Fig. 6 bezüglich der Ortsvermittlungsstelle OV2 des zweiten Fernmeldenetzes N2 erläutert worden sind. Die Teilnehmerstelle TLN ist also nach dem kurzen Umschaltaugenblick sofort wieder in bzw. von beiden Fernmeldenetzen N1 und N2 aus erreichbar.

Fig. 8 veranschaulicht schließlich die nächsten Verfahrensschritte, die noch ausgeführt werden. Zunächst wird nach dem Anschalten der Teilnehmerstelle TLN an der Ortsvermittlungsstelle OV2 des zweiten Fernmeldenetzes N2 die primäre Wegeleitinformation in der Tabelle PLT1 des ersten Fernmeldenetzes N1 so geändert, daß von dem ersten Fernmeldenetz N1 ausgehende Verbindungswünsche V1 zu der Teilnehmerstelle TLN hin von dem ersten Fernmeldenetz N1 über die genannte Verbindungsstelle GW zu dem zweiten Fernmeldenetz N2 hin geleitet werden.

Anschließend werden die sekundären Wegeleitinformationen bezüglich der Teilnehmerstelle TLN in den Ortsvermittlungsstellen OV1 und OV2 der beiden Fernmeldenetze N1 und N2 gelöscht.

Schließlich werden in der Ortsvermittlungsstelle OV1 des ersten Fernmeldenetzes N1 Angaben bezüglich der Teilnehmerstelle TLN, die dort bisher angeschaltet war, gelöscht, und in der Ortsvermittlungsstelle OV2 des zweiten Fernmeldenetzes N2 werden dort zusammen mit der sekundären Wegeleitinformation zuvor gespeicherte Angaben, gemäß denen sich die betreffende Teilnehmerstelle im Wechsel befindet, in Angaben geändert, die nunmehr den Anschluß der betreffenden Teilnehmerstelle TLN an der Ortsvermittlungsstelle OV2 angeben.

Damit sind gemäß Fig. 8 in den beiden Fernmeldenetzen N1 und N2 bezüglich der Teilnehmerstelle TLN gewissermaßen spiegelbildlich zu den ursprünglichen Verhältnissen, von denen gemäß Fig. 1 ausgegangen worden ist, entsprechende Verhältnisse hergestellt.

Bezüglich des vorstehend erläuterten Verfahrens gemäß der Erfindung sei noch angemerkt, daß der Fall auftreten kann, daß im Zuge des Aufbaus einer Verbindung diese mehrfach über die Verbindungsstelle GW zwischen den beiden Fernmeldenetzen N1 und N2 geführt werden, was als unerwünschte Netzbelastung angesehen wird. Um diese Netzbelastung zu reduzieren, können derartige Verbindungen über eine sogenannte Transitknotendurchgangszählung erfaßt und abgebaut werden. Derartige Verbindungsführungen können jedoch ebenso durch besondere Maßnahmen in den beteiligten Ortsvermittlungsstellen OV1, OV2 vermieden werden. Eine dieser besonderen Maßnahmen kann z.B. darin bestehen, daß die die betreffende Verbindung weiterleitende Ortsvermittlungsstelle für die Dauer einer Schutzzeit nach erfolgter Weiterleitung auf weitere Weiterleitungen bzw. Belegungsversuche zu der Teilnehmerstelle TLN hin verzichtet. Die Gefahr des Auftretens derartiger Verbindungen ist im vorliegenden Falle im wesentlichen auf die Zeitspanne beschränkt, innerhalb der die Teilnehmerstelle TLN vom ersten Fernmeldenetz N1 zum zweiten Fernmeldenetz N2 umgeschaltet wird.

Die Umschaltung der betrachteten Teilnehmerstelle TLN vom ersten Fernmeldenetz N1 zum zweiten Fernmeldenetz N2 ist vorstehend als physikalische Umschaltung erläutert worden, bei der die Teilnehmerstelle TLN direkt an die Ortsvermittlungsstelle angeschlossen ist. Gemäß neuer Netzarchitektur kann eine Teilnehmerstelle TLN jedoch auch an einem Zugriffsnetzwerk angeschlossen sein, welches über eine Zugriffsnetzwerk-Schnittstelle, z.B. eine V5.2-Schnittstelle, an der Ortsvermittlungsstelle angeschlossen ist. Als Kriterium für eine Aktivierung bzw. Deaktivierung des Verbindungsaufbaus zu einer derartig angeschlossenen Teilnehmerstelle TLN hin kann dabei entsprechend der jeweiligen sekundären Wegeleitinformation die der Ortsvermittlungsstelle über die Zugriffsnetzwerk-Schnittstelle signalisierte Verfügbarkeit/Nichtverfügbarkeit der Teilnehmerstellen TLN herangezogen werden.

Abschließend sei noch darauf hingewiesen, daß die primären und die sekundären Wegeleitinformationen in den betrachteten Fernmeldenetzen N1 und N2 entweder lokal oder zentral gespeichert und zur Verfügung gestellt werden können. Dies betrifft sowohl die Tabellen PLT1 bzw. PLT2 für primäre Wegleitinformationen als auch die Tabellen SLT1, SLT2 für sekundäre Wegeleitinformationen.

**Patentansprüche**

1.   Verfahren zum Umschalten einer an einem ersten Fernmeldenetz angeschlossenen Teilnehmerstelle von dem ersten Fernmeldenetz zu einem zweiten Fernmeldenetz, welches mit dem ersten Fernmeldenetz über mindestens eine Verbindungsstelle verbunden ist,
wobei in beiden Fernmeldenetzen bezüglich der betreffenden Teilnehmerstelle primäre Wegeleitinformationen (Routing-Informationen) enthalten sind, durch welche der Verbindungsaufbau von dem jeweiligen Fernmeldenetz zu der Ortsvermittlungsstelle hin festgelegt wird, an der die betreffende Teilnehmerstelle in dem ersten Fernmeldenetz angeschlossen ist, **dadurch gekennzeichnet,**
daß zunächst in der Ortsvermittlungsstelle (OV1) des ersten Fernmeldenetzes (N1) eine sekundäre Wegeleitinformation gespeichert wird, welche bezüglich der betreffenden Teilnehmerstelle (TLN) bei deren Nichtvorhandensein einen Verbindungsaufbau über die genannte Verbindungsstelle (GW)

zu dem zweiten Fernmeldenetz (N2) hin festlegt, und daß schließlich die betreffende Teilnehmerstelle (TLN) von der Ortsvermittlungsstelle (OV1) des ersten Fernmeldenetzes (N1) abgeschaltet und an der Ortsvermittlungsstelle (OV2) des zweiten Fernmeldenetzes (N2) angeschaltet wird.

2. Verfahren nach Anspruch 1 **dadurch gekennzeichnet,** daß die primäre Wegeleitinformation in dem zweiten Fernmeldenetz (N2) bezüglich der betreffenden Teilnehmerstelle (TLN) derart geändert wird, daß Verbindungen in dem zweiten Fernmeldenetz (N2) zu der betreffenden Teilnehmerstelle (TLN) hin zu der Ortsvermittlungsstelle (OV2) dieses zweiten Fernmeldenetzes (N2) hin aufgebaut werden.

3. Verfahren nach Anspruch 1 oder 2, **dadurch gekennzeichnet,** daß mit der Speicherung der sekundären Wegeleitinformationen in der Ortsvermittlungsstelle (OV1) des ersten Fernmeldenetzes (N1) bezüglich der genannten Teilnehmerstelle (TLN) weitere Angaben festgehalten werden, die im Zuge von zu der Ortsvermittlungsstelle (OV1) des ersten Fernmeldenetzes (N1) hin gelangenden Verbindungswünschen bezüglich der betreffenden Teilnehmerstelle (TLN) in der Ortsvermittlungsstelle (OV1) des ersten Fernmeldenetzes (N1) einen Hinweis auf eine im Wechsel befindliche Teilnehmerstelle liefern, und daß diese weiteren Angaben im Zuge eines Verbindungsaufbaus zu der betreffenden Teilnehmerstelle (TLN) hin derart ausgewertet werden, daß in dem Fall, daß die betreffende Teilnehmerstelle (TLN) an der Ortsvermittlungsstelle (OV1) des ersten Fernmeldenetzes (N1) noch angeschlossen ist, der Verbindungsaufbau zu der betreffenden Teilnehmerstelle (TLN) über diese Ortsvermittlungsstelle (OV1) erfolgt, während bei nicht mehr an der betreffenden Ortsvermittlungsstelle (OV1) angeschlossener Teilnehmerstelle (TLN) die zugehörige sekundäre Wegeleitinformation zur Anwendung gelangt.

4. Verfahren nach Anspruch 3, **dadurch gekennzeichnet,** daß zur Aktivierung der sekundären Wegeleitinformation bezüglich der betreffenden Teilnehmerstelle (TLN) in der Ortsvermittlungsstelle (OV1) des ersten Fernmeldenetzes (N1) ein beim Abschalten der betreffenden Teilnehmerstelle (TLN) hervorgerufener Fehler auf der Teilnehmerstellenanschlußleitung herangezogen wird.

5. Verfahren nach einem der Ansprüche 1 bis 4, **dadurch gekennzeichnet,** daß nach dem Abschalten der betreffenden Teilnehmerstelle (TLN) von der Ortsvermittlungsstelle (OV1) des ersten Fernmeldenetzes (N1) die primäre Wegeleitinformation in dem ersten Fernmeldenetz (N1) derart geändert wird, daß von dem ersten Fernmeldenetz (N1) ausgehende Verbindungswünsche zu der betreffenden Teilnehmerstelle (TLN) hin von dem ersten Fernmeldenetz (N1) über die genannte Verbindungsstelle (GW) zu dem zweiten Fernmeldenetz (N2) hin geleitet werden.

6. Verfahren nach Anspruch 5, **dadurch gekennzeichnet,** daß anschließend die sekundären Wegeleitinformationen bezüglich der betreffenden Teilnehmerstelle (TLN) in der Ortsvermittlungsstelle (OV1) des ersten Fernmeldenetzes (N1) gelöscht werden.

7. Verfahren nach Anspruch 5 oder 6, **dadurch gekennzeichnet,** daß in der Ortsvermittlungsstelle (OV1) des ersten Fernmeldenetzes (N1) Angaben bezüglich der betreffenden Teilnehmerstelle (TLN), die dort bisher angeschaltet war, gelöscht werden.

8. Verfahren nach Anspruch 4, **dadurch gekennzeichnet,** daß beim Abschalten der Teilnehmerstelle (TLN) in dem Fall, daß es sich um eine analoge Teilnehmerstelle handelt, ein Leitungsfehler in der Ortsvermittlungsstelle (OV1) des ersten Fernmeldenetzes (N1) durch Erd- oder Kurzschluß der zugehörigen Teilnehmerleitung hervorgerufen wird.

9. Verfahrennach Anspruch 4, **dadurch gekennzeichnet,** daß zur Leitungsfehlererkennung einer digitalen Teilnehmeranschlußleitung ein Trägersignal für die Dauer der Teilnehmerumschaltung permanent wirksam gemacht und seitens der Ortsvermittlungsstelle (OV1) des ersten Fernmeldenetzes (N1) überwacht wird.

10. Verfahren zum Umschalten einer an einem ersten Fernmeldenetz angeschlossenen Teilnehmerstelle von dem ersten Fernmeldenetz zu einem zweiten Fernmeldenetz, welches mit dem ersten Fernmeldenetz über mindestens eine Verbindungsstelle verbunden ist, wobei in beiden Fernmeldenetzen bezüglich der betreffenden Teilnehmerstelle primäre Wegeleitinformationen (Routing-Informationen) enthalten sind, durch welche der Verbindungsaufbau von dem jeweiligen Fernmeldenetz zu der Ortsvermittlungsstelle hin festgelegt wird, an der die betreffende Teilnehmerstelle in dem ersten Fernmeldenetz angeschlossen ist, **dadurch gekennzeichnet,** daß zunächst in der Ortsvermittlungsstelle (OV2) des zweiten Fernmeldenetzes (N2) eine sekundäre Wegeleitinformation gespeichert wird, welche bezüglich der betreffenden Teilnehmerstelle (TLN) bei deren Nichtvorhandensein einen Verbindungsaufbau über die genannte Verbindungsstelle (GW)

zu dem ersten Fernmeldenetz (N1) hin festlegt,

daß sodann die primäre Wegeleitinformation in dem zweiten Fernmeldenetz (N2) bezüglich der betreffenden Teilnehmerstelle (TLN) derart geändert wird, daß Verbindungen in dem zweiten Fernmeldenetz (N2) zu der betreffenden Teilnehmerstelle (TLN) hin zu der Ortsvermittlungsstelle (OV2) dieses zweiten Fernmeldenetzes (N2) aufgebaut werden,

und daß schließlich die betreffende Teilnehmerstelle (TLN) von der Ortsvermittlungsstelle (OV1) des ersten Fernmeldenetzes (N1) abgeschaltet und an der Ortsvermittlungsstelle (OV2) des zweiten Fernmeldenetzes (N2) angeschaltet wird.

11. Verfahren nach Anspruch 10, **dadurch gekennzeichnet,** daß mit der Speicherung der sekundären Wegeleitinformationen in der Ortsvermittlungsstelle (OV2) des zweiten Fernmeldenetzes (N2) bezüglich der genannten Teilnehmerstelle (TLN) weitere Angaben festgehalten werden, die im Zuge von zu der Ortsvermittlungsstelle (OV2) des zweiten Fernmeldenetzes (N2) hin gelangenden Verbindungswünschen bezüglich der betreffenden Teilnehmerstelle (TLN) in der Ortsvermittlungsstelle (OV2) des zweiten Fernmeldenetzes (N2) einen Hinweis auf einen Teilnehmer im Wechsel liefern, und daß diese weiteren Angaben im Zuge eines Verbindungsaufbaus zu der betreffenden Teilnehmerstelle (TLN) hin derart ausgewertet werden, daß in dem Fall, daß die betreffende Teilnehmerstelle (TLN) an der zugehörigen Ortsvermittlungsstelle (OV2) schon angeschlossen ist, der Verbindungsaufbau zu der betreffenden Teilnehmerstelle (TLN) über diese Ortsvermittlungsstelle (OV2) erfolgt, während bei noch nicht an der betreffenden Ortsvermittlungsstelle (OV2) angeschlossener Teilnehmersteile (TLN) die zugehörige sekundäre Wegeleitinformation zur Anwendung gelangt.

12. Verfahren nach Anspruch 11, **dadurch gekennzeichnet,** daß zur Deaktivierung der sekundären Wegeleitinformation bezüglich der betreffenden Teilnehmerstelle (TLN) in der Ortsvermittlungsstelle (OV2) des zweiten Fernmeldenetzes (N2) ein beim Anschalten der betreffenden Teilnehmerstelle (TLN) hervorgerufenes Fehlerendesignal auf der zugehörigen Teilnehmerstellenanschlußleitung herangezogen wird.

13. Verfahren nach einem der Ansprüche 10 bis 12, **dadurch gekennzeichnet,** daß nach dem Abschalten der betreffenden Teilnehmerstelle (TLN) von der Ortsvermittlungsstelle (OV1) des ersten Fernmeldenetzes (N1) die primäre Wegeleitinformation in dem ersten Fernmeldenetz (N1) derart geändert wird, daß von dem ersten Fernmeldenetz (N1) ausgehende Verbindungswünsche zu der betreffenden Teilnehmerstelle (TLN) hin von dem ersten Fernmeldenetz (N1) über die genannte Verbindungsstelle (GW) zu dem zweiten Fernmeldenetz (N2) hin geleitet werden.

14. Verfahren nach einem der Ansprüche 10 bis 13, **dadurch gekennzeichnet,** daß die sekundären Wegeleitinformationen bezüglich der betreffenden Teilnehmerstelle (TLN) in der Ortsvermittlungsstelle (OV2) des zweiten Fernmeldenetzes (N2) gelöscht werden.

15. Verfahren nach Anspruch 13 oder 14, **dadurch gekennzeichnet,** daß in der Ortsvermittlungsstelle (OV2) des zweiten Fernmeldenetzes (N2) die dort zusammen mit der sekundären Wegeleitinformation zuvor gespeicherte Angabe, gemäß der sich die betreffende Teilnehmerstelle (TLN) im Wechsel befindet, in den Anschluß der betreffenden Teilnehmerstelle (TLN) an dieser Ortsvermittlungsstelle (OV2) angebende Angaben geändert wird.

16. Verfahren nach Anspruch 12, **dadurch gekennzeichnet,** daß beim Anschalten der Teilnehmerstelle (TLN) in dem Fall, daß es sich um eine analoge Teilnehmerstelle handelt, ein Leitungsfehlerende an der Ortsvermittlungsstelle (OV2) des zweiten Fernmeldenetzes N2 durch die Aufhebung eines dort bestehenden Erd- oder Kurzschlusses der zugehörigen Teilnehmerleitung erreicht wird.

17. Verfahren nach Anspruch 12, **dadurch gekennzeichnet**, daß zur Leitungsfehlerendeerkennung einer digitalen Teilnehmeranschlußleitung ein Trägersignal für die Dauer der Teilnehmerstellenumschaltung permanent wirksam gemacht und seitens der Ortsvermittlungsstelle (OV2) des zweiten Fernmeldenetzes (N2) überwacht wird.

18. Verfahren nach einem der Ansprüche 1 bis 9, **gekennzeichnet** durch die zusätzliche Anwendung des Verfahrens nach einem der Ansprüche 10 bis 17.

19. Verfahren nach einem der Ansprüche 1 bis 18, **dadurch gekennzeichnet,** daß die primären und sekundären Wegeleitinformationen im jeweiligen Fernmeldenetz (N1, N2) entweder lokal auf Vermittlungsstellenebene oder netzzentral gespeichert und zur Verfügung gestellt werden.

20. Verfahren nach einem der Ansprüche 1 bis 19, **dadurch gekennzeichnet,** daß eine im Zuge des Aufbaus ein und derselben Verbindung mehrfach über die Verbindungsstelle (GW) zwischen den beiden Fernmeldenetzen (N1, N2) erfolgende Verbindungsführung durch eine Zählung des Verbindungsdurchgangs in jeweils beteiligten Transitknoten erfaßt und der Abbau der betreffenden Verbindung bei Überschreiten einer festgelegten Anzahl solcher Verbindungsdurchgänge bewirkt wird.

**21.** Verfahren nach einem der Ansprüche 1 bis 19, **dadurch gekennzeichnet,** daß eine im Zuge des Aufbaus ein und derselben Verbindung mehrfach über die Verbindungsstelle (GW) zwischen den beiden Fernmeldenetzen (N1, N2) erfolgende Verbindungsführung durch besondere Maßnahmen in den beteiligten Ortsvermittlungsstellen (OV1, OV2) vermieden wird..

**22.** Verfahren nach einem der Ansprüche 1 bis 21, **dadurch gekennzeichnet,** daß die Teilnehmerstelle (TLN) über eine Zugriffsnetzwerk-Schnittstelle an mindestens eine der Ortsvermittlungsstellen (OV1, OV2) angeschlossen ist bzw. anzuschließen ist und daß als Kriterium für eine Aktivierung bzw. Deaktivierung des Verbindungsaufbaus zu der betreffenden Teilnehmerstelle (TLN) hin entsprechend der jeweiligen sekundären Wegeleitinformationen die an die jeweilige Ortsvermittlungsstelle seitens des Zugriffsnetzwerks signalisierte Verfügbarkeit/Nichtverfügbarkeit der Teilnehmerstelle (TLN) herangezogen wird.

FIG 1

OV1

| U | N | T |
|---|---|---|
| – | 1 | x |
| : | : | : |

SLT1

TLN

| N | T |
|---|---|
| 1 | x |
| : | : |

PLT1

V1

N1

GW

OV2

| U | N | T |
|---|---|---|
| – | – | – |
| : | : | : |

SLT2

PLT2

N2

| N | T |
|---|---|
| 1 | x |
| : | : |

V2

FIG 2

OV1

| U | N | T |
|---|---|---|
| w | 2 | x |
| : | : | : |

SLT1

TLN

| N | T |
|---|---|
| 1 | x |
| : | : |

PLT1

V1

N1

GW

OV2

PLT2

N2

| N | T |
|---|---|
| 1 | x |
| : | : |

V2

FIG 3

FIG 4

## FIG 5

## FIG 6

# FIG 7

# FIG 8

Europäisches
Patentamt

**EUROPÄISCHER RECHERCHENBERICHT**

Nummer der Anmeldung

EP 98 11 6939

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 708 570 A (AT & T CORP) 24. April 1996 * Spalte 1, Zeile 50 - Spalte 2, Zeile 37 * * Ansprüche 1-10 * | 1-22 | H04Q3/00 |
| A | LIN Y -B: "A CACHE APPROACH FOR SUPPORTING LIFE-TIME UPT NUMBER" WIRELESS NETWORKS, Bd. 2, Nr. 2, 1. Juni 1996, Seiten 155-160, XP000620237 * Seite 155, Spalte 1, Zeile 1 - Seite 157, Spalte 2, Zeile 30 * | 1-22 | |
| A | BISHOP T: "FREEING THE NETWORK FOR COMPETITION" TELECOMMUNICATIONS, Bd. 29, Nr. 4, April 1995, Seite 75, 77/78, 80 XP000677133 * Seite 78, Spalte 1, Zeile 26 - Spalte 2, Zeile 33 * | 1-22 | |
| A | WO 97 33441 A (STENTOR RESOURCE CENTRE INC) 12. September 1997 * das ganze Dokument * | 1-22 | RECHERCHIERTE SACHGEBIETE (Int.Cl.6) H04Q |
| A | EP 0 751 691 A (SIEMENS STROMBERG CARLSON) 2. Januar 1997 * Seite 2, Zeile 51 - Seite 4, Zeile 36 * * Seite 15, Zeile 25 - Seite 19, Zeile 21 * * Ansprüche 1-30 * | 1-22 | |
| A | US 5 625 681 A (BUTLER II GEORGE D) 29. April 1997 * das ganze Dokument * | 1-22 | |

Der vorliegende Recherchenbericht wurde für alle Patentansprüche erstellt

| Recherchenort | Abschlußdatum der Recherche | Prüfer |
|---|---|---|
| DEN HAAG | 4. Februar 1999 | Chassatte, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

EP 0 984 638 A1

## ANHANG ZUM EUROPÄISCHEN RECHERCHENBERICHT
## ÜBER DIE EUROPÄISCHE PATENTANMELDUNG NR.

EP 98 11 6939

In diesem Anhang sind die Mitglieder der Patentfamilien der im obengenannten europaischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewahr.

04-02-1999

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0708570 | A | 24-04-1996 | CA | 2156002 | A | 19-04-1996 |
| | | | CA | 2232772 | A | 19-04-1996 |
| | | | JP | 8214059 | A | 20-08-1996 |
| | | | US | 5661792 | A | 26-08-1997 |
| WO 9733441 | A | 12-09-1997 | AU | 1865197 | A | 22-09-1997 |
| | | | CA | 2178860 | A | 09-09-1997 |
| | | | CA | 2199432 | A | 07-05-1998 |
| EP 0751691 | A | 02-01-1997 | US | 5748724 | A | 05-05-1998 |
| | | | US | 5689555 | A | 18-11-1997 |
| | | | CA | 2180228 | A | 31-12-1998 |
| | | | US | 5696816 | A | 09-12-1997 |
| | | | US | 5771284 | A | 23-06-1998 |
| | | | US | 5796813 | A | 18-08-1998 |
| US 5625681 | A | 29-04-1997 | KEINE | | | |

EPO FORM P0461

Für nähere Einzelheiten zu diesem Anhang : siehe Amtsblatt des Europäischen Patentamts, Nr.12/82